# EUROPEAN PATENT APPLICATION

(11) **EP 2 692 938 A2**
(43) Date of publication of application: **05.02.2014**
(21) Application number: 12763001.0
(22) Date of filing: 27.03.2012
(51) Int. Cl.: D06F 39/08, D06F 39/02, C02F 1/48

(54) **HOSE FOR SUPPLYING MAGNETIZED WATER**

(30) Priority: 28.03.2011 KR 20110027483
(71) Applicant: Daewoo Electronics Corporation, Seoul 100-031 (KR)
(72) Inventor: MIN, Ga Young, Bucheon-si Gyeonggi-do 420-730 (KR); LEE, Jae Woo, Seogu Incheon 404-209 (KR)
(74) Representative: Michalski Hüttermann & Partner Patentanwälte
(86) International application number: PCT/KR2012/002213
(87) International publication number: WO 2012/134142

(57) **Abstract**

Disclosed herein is a hose for supplying magnetized water, including a pipe part guiding the water and a magnetized part in the pipe part and generating a magnetic field, in which the magnetized part connects the pipe part, whereby the water including a lime material passes through a magnetic field of the magnetized part. The hose and an associated method may increase washing power.

## Description

### [Technical Field]

The present invention relates to a hose for supplying magnetized water, and more particularly, to a hose for supplying magnetized water capable of increasing a washing power by changing physical properties of lime water introduced into a washing machine.

### [Background Art]

In general, a washing machine is an apparatus which washes laundry by mixing wash water and detergent with the laundry.

The washing machine includes a body or cabinet, a tub mounted in the body and configure to hold wash water, a rotatable drum in the tub and configured to have laundry placed therein, and a supply part supplying the tub with the wash water.

The laundry is put in the drum of the washing machine having one portion open. The washing machine having the drum which is open facing upwards is referred to as an electrical automatic pulsator type washing machine, and a washing machine having the drum which is open laterally is referred to as a drum washing machine, which washes the laundry by rotating the drum.

The supply part includes a hose part connected to a water feeding source, such as a faucet, and a detergent supply part that receives wash water from the hose part, temporarily stores detergent, and guides the wash water and the detergent to the tub.

### [Disclosure]

### [Technical Problem]

In accordance with the related art, when a lime material is included in the wash water, the lime material sticks to one or more supply part pipes, and thus the pipe may become restricted or clogged.

Further, since wash water including the lime material does not smoothly mix with the detergent, a detergent input quantity may need to increase to offset the reduction in washing power, thereby causing a problem in that the detergent may remain in the laundry.

Therefore, there is a need to solve the problem.

The present invention may solve such problems of the related art, and an aspect of the invention is to provide a hose and method for passing water through a magnetic field that may be capable of preventing foreign materials such as lime from sticking to a pipe (e.g., by possibly activating wash water) and possibly improving a washing power.

### [Technical Solution]

In accordance with an aspect of the invention, a hose for supplying magnetized water, includes a pipe part guiding the water; and a magnetized part in the pipe part and generating a magnetic field, in which the magnetized part connects the pipe part.

The pipe part may include a first pipe and a second pipe, and the magnetized part may include a first case part connected to the first pipe; a second case part screw-connected to the first case part and connected to the second pipe; and a magnetic part in the second case part and generating the magnetic field.

The magnetized part may further include a first packing between the first case part and the magnetic part, configured to prevent water from leaking; and a second packing between the second case part and the magnetic part, configured to prevent water from leaking.

The first case part may include a first insertion body in the first pipe to guide the water; and a first coupling body extending from the first insertion body and having a screw thread on an inner side thereof.

The second case part may include a second insertion body in the second pipe to guide the water; and a second coupling body extending from the second insertion body and having a screw thread on an outer side thereof so as to be screw-assembled with the first coupling body, in which the magnetic part is in the second coupling body.

The magnetized part may include a compartment in the second case part and having a waterway; and a generation part in the compartment and generating the magnetic field.

The compartment may include a cylindrical insertion box in the second case part and having a curvature corresponding to an inner side of the second case part; a pair of waterway plates connected to or in contact with an inner side of the insertion box, spaced apart from each other and forming the waterway; a sealing plate connecting one end of the waterway plate to one end of the insertion box and configured to close an opened portion of the insertion box, except for the waterway; and a cover plate at another end of the waterway plate and another end of the insertion box, configured to open and close the opened portion of the insertion box, except for the waterway.

The cover plate may have a disk shape and be configured to open and close the other end of the insertion box. The cover plate may be provided with a through hole which communicates with the waterway, and the waterway plate may have an elastic plate be protruding into the through hole so as to adhere to the cover plate.

A water-proofing pad may be between the cover plate and the elastic plate to prevent water from leaking.

An inner side of the other end of the insertion box may have a guide projection (e.g., an inwardly protruding guide projection), and the cover plate may have a guide groove into which the guide projection is inserted.

The generation part may include one or more third magnet bodies (e.g., magnets) embedded in the compartment; and a shielding plate covering the third magnet body(ies), configured to shield an electromagnetic wave.

The plurality of third magnet bodies may be spaced apart from each other and be configured to induce a pulse (e.g., generation of one or more pulses).

### [Advantageous Effects]

In accordance with one or more embodiments of the present invention, the hose for passing water through a magnetic field may be capable of reducing or preventing a lime material from sticking to a pipe part by possibly changing chemical and/or physical properties of wash water including the lime material while the wash water passes through a magnetized part.

In accordance with embodiment(s) of the present invention, the hose for passing water through a magnetic field may decrease the consumed quantity of a detergent and/or increase a washing power, possibly by activating the water, and may reduce or suppress the use of a fabric softener and/or enhance pliability of the laundry.

In accordance with embodiment(s) of the present invention, the hose for passing water through a magnetic field may be used by replacing only a magnetized part at the time of the occurrence of defect in a magnetized part since the magnetized part connects a pipe part.

In accordance with embodiment(s) of the present invention, in the hose for passing water through a magnetic field, a first packing and a second packing adhere to ends of a magnetic part to prevent wash water from leaking.

In accordance with embodiment(s) of the present invention, in the hose for passing water through a magnetic field, a water-proofing pad is disposed between an elastic plate and a cover plate to block wash water from being undesirably introduced into a water-free or substantially water-free compartment.

In accordance with embodiment(s) of the present invention, in the hose for passing water through a magnetic field, third or additional magnet bodies are spaced apart from each other, thereby improving the magnetic field or magnetic force.

In accordance with embodiment(s) of the present invention, in the hose for passing water through a magnetic field, a shielding plate is attached to one or more third magnet bodies to discharge a possibly harmful electromagnetic wave to the outside, thereby reducing or preventing the effect of the possibly harmful (or interfering) electromagnetic wave on other electronic devices.

### [Description of Drawings]

The above and other aspects, features and advantages of the invention will become apparent from the following detailed description in conjunction with the accompanying drawings, in which:
FIG. 1 is a diagram schematically illustrating a state in which a hose for supplying magnetized water in accordance with one or more first embodiments of the present invention is mounted in or attached to a washing machine;
FIG. 2 is a cross-sectional view schematically illustrating the hose for supplying magnetized water in accordance with the first embodiment(s) of the present invention;
FIG. 3 is a diagram schematically illustrating a state in which a hose for supplying magnetized water in accordance with one or more second embodiments of the present invention is mounted in or attached to a washing machine;
FIG. 4 is a cross-sectional view schematically illustrating the hose for supplying magnetized water in accordance with the second embodiment(s) of the present invention;
FIG. 5 is a diagram schematically illustrating a state in which a hose for supplying magnetized water in accordance with one or more third embodiments of the present invention is mounted in or attached to a washing machine;
FIG. 6 is a cross-sectional view schematically illustrating the hose for supplying magnetized water in accordance with the third embodiment(s) of the present invention;
FIG. 7 is a cross-sectional view schematically illustrating a magnetized part in the hose for supplying magnetized water in accordance with the third embodiment(s) of the present invention; and
FIG. 8 is an exploded perspective view schematically illustrating a magnetic part in the hose for supplying magnetized water in accordance with the third embodiment(s) of the present invention.

### [Detailed Description]

Hereinafter, embodiments of a hose for supplying magnetized water in accordance with the present invention will be described with reference to the accompanying drawings. During the process, a thickness of lines, a size of components, or the like, illustrated in the drawings may be exaggeratedly illustrated for clearness and convenience of explanation. Further, the following terminologies are defined in consideration of the functions in the present invention and may be construed in different ways by intention or practice of users and operators. Therefore, the definitions of terms used in the present description should be construed based on the contents throughout the specification.

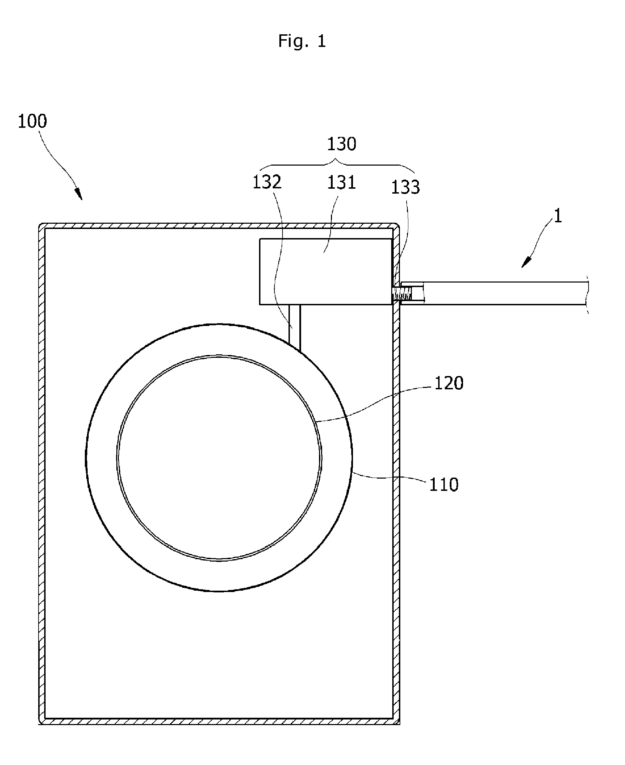

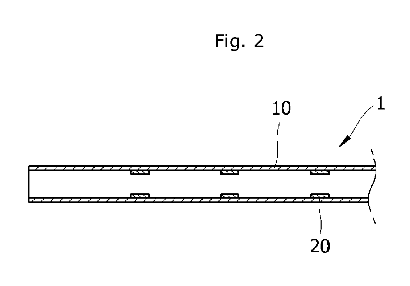

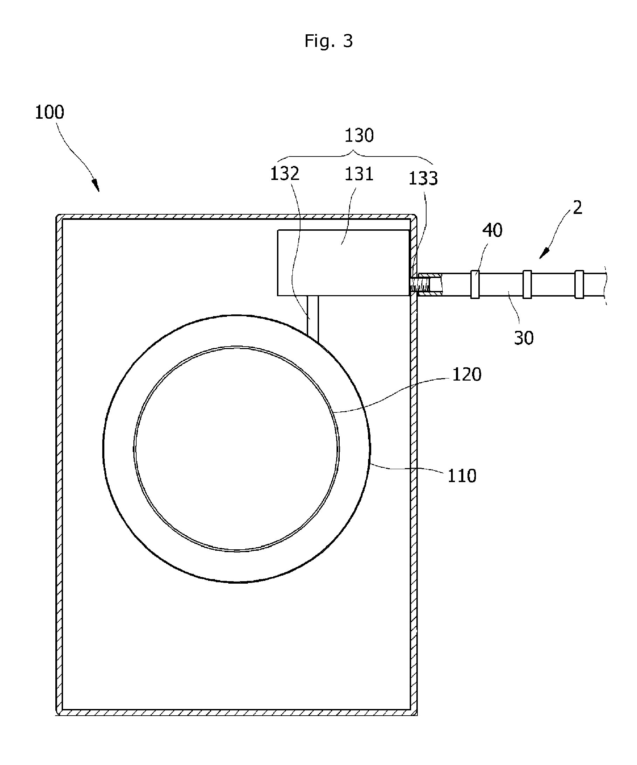

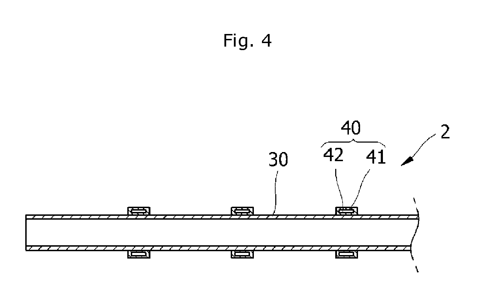

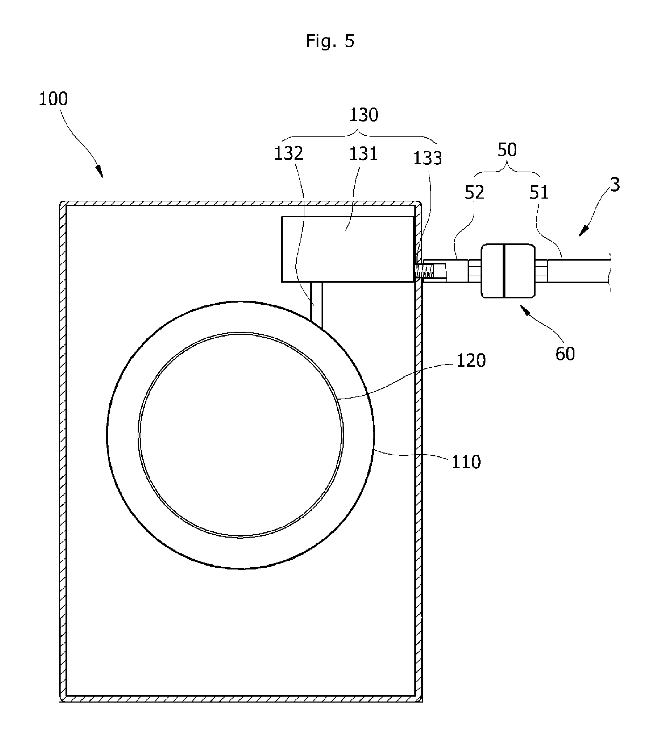

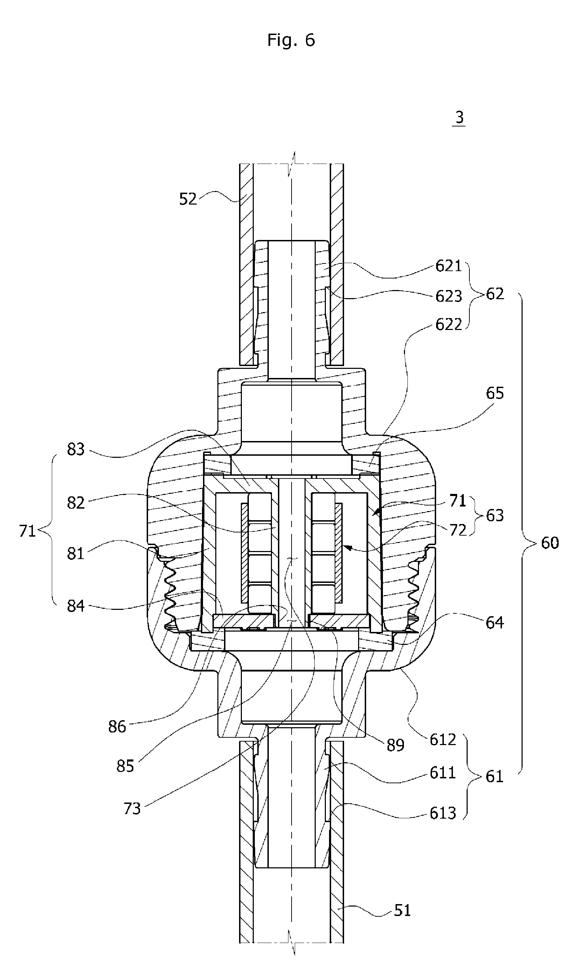

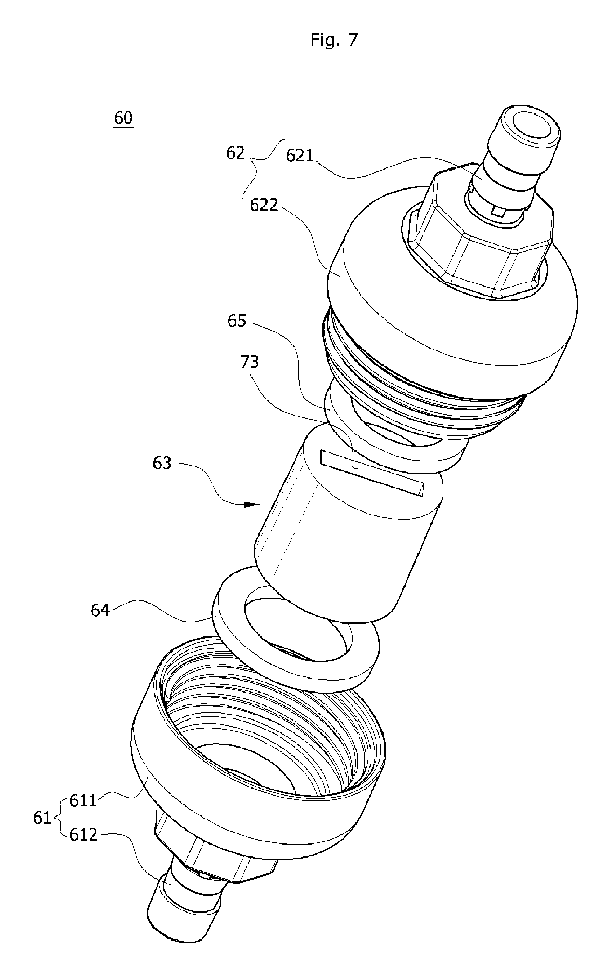

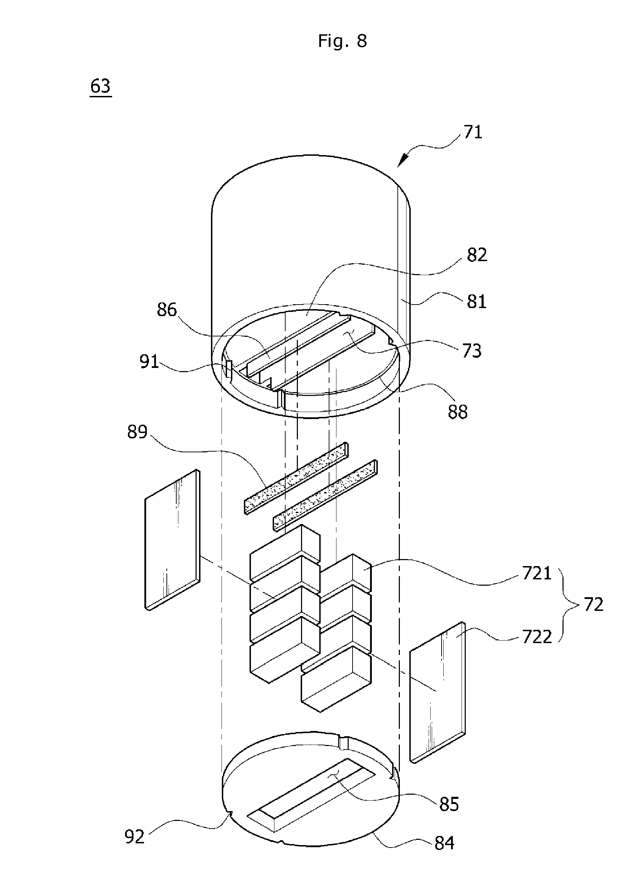

FIG. 1 is a diagram schematically illustrating a state in which a hose in accordance with one or more first embodiment of the present invention is mounted in or attached to a washing machine and FIG. 2 is a cross-sectional view schematically illustrating the hose in accordance with the first embodiment(s) of the present invention. FIG. 3 is a diagram schematically illustrating a state in which a hose in accordance with one or more second embodiment of the present invention is mounted in or attached to a washing machine and FIG. 4 is a cross-sectional view schematically illustrating the hose in accordance with the second embodiment(s) of the present invention. FIG. 5 is a diagram schematically illustrating a state in which a hose in accordance with one or more third embodiments of the present invention is mounted in or attached to a washing machine, FIG. 6 is a cross-sectional view schematically illustrating the hose in accordance with the third embodiment(s) of the present invention, FIG. 7 is a cross-sectional view schematically illustrating a magnetized water part in the hose in accordance with the third embodiment(s) of the present invention, and FIG. 8 is an exploded perspective view schematically illustrating a magnetic part in the hose in accordance with the third embodiment(s) of the present invention.

Referring to FIGS. 1 to 6, hoses 1, 2, and 3 for passing water through a magnetic field in accordance with the first, second, and third embodiments include pipe parts 10, 30, and 50 guiding wash water, and magnetized parts 20, 40, and 60.

The pipe parts 10, 30, and 50 have a pipe shape to guide the wash water. The pipe parts 10, 30, and 50 have one end connected to a water feeding source, such as a faucet, and another end connected to a supply object, such as a washing machine 100.

For example, the washing machine 100 includes a tub 110 for storing the wash water and a rotatable drum 120 in the tub 110. The drum 120 has a cylindrical shape of which one portion is open, and the drum 120 rotates by driving a motor to rotate the drum 120 and wash the laundry.

The washing machine 100 has a detergent storing part 130 therein. The detergent storing part 130 includes a storage box 131 for storing a detergent, a detergent pipe 132 guiding the wash water and the detergent into the tub 110, and a wash water pipe 133 guiding the wash water to the storage box 131.

The reservoir 131 has a plurality of storage spaces which are partitioned by a barrier rib to store detergent, fabric softener, and/or the like.

The detergent pipe 132 has one portion connected to the reservoir 131 and another portion connected to the tub 110 to guide the wash water and the detergent to the tub 110.

The wash water pipe 133 has one portion connected to the reservoir 131 and another portion protruding outside the washing machine 100. The wash water pipe 133 is connected to the pipe parts 10, 30, and 50 to supply the wash water.

Meanwhile, one end of each of the pipe parts 10, 30, and 50 is connected to the water feeding source, such as a faucet, and the wash water discharged to the other end of the pipe parts 10, 30, and 50 may be stored in a container in which the laundry is stored, in addition to being stored in the washing machine 100.

The magnetized parts 20, 40, and 60, which are mounted in the pipe parts 10, 30, and 50, may change properties of lime water (for example, by magnetic or other force).

That is, lime water may include one or more of calcium hydrogen carbonate (2CaHCO₃(aq)), in which the calcium hydrogen carbonate may be changed into limestone (2CaCO₃(s)) + water (H₂O(l)) + carbon dioxide (CO₂(g)) by a magnetic or other force. Alternatively, the calcium hydrogen carbonate may pass through the magnetized part 20.

The limestone that may be generated and/or that may pass through the magnetized parts 20, 40, and 60 may be fragile and/or soft, and perhaps not as adherent as possible to a surface. If so, the limestone may not adhere to inner sides of the pipe parts 10, 30, and 50 as much as it might otherwise.

Further, the wash water passing through the magnetized parts 20, 40, and 60 may have a densified property and/or structure, perhaps representing "activated water," thereby possibly increasing a washing power and/or pliability of the laundry.

Referring to FIGS. 1 and 2, the magnetized part 20 in accordance with one or more embodiments of the present invention is a first magnet body having a magnetic field and is attached to an inner side of the pipe part 10. For example, as the magnetized part 20, a neodymium magnet, which is a permanent magnet having a strong magnetic field, is used.

The magnetized part 20 has a circular belt shape and is placed along an inner diameter of the pipe part 10 so as to uniformly apply a magnetic field inside the pipe part 10. The magnetized part 20 may change physical and/or chemical properties of the wash water moving into the pipe part 10 (e.g., by the magnetic field and/or other force).

When a plurality of magnetized parts 20 are placed in a longitudinal direction of the pipe part 10, the wash water passing through the pipe part 10 may be "activated," and a lime material may be extracted.

An action of the hose for passing water through a magnetic field in accordance with the first embodiment of the present invention having the above-mentioned structure will be described below.

When the wash water includes a lime material, one end of the pipe part 10 having the magnetized part 20 attached to an inner side thereof is connected to the water feeding source and another end of the pipe part 10 is connected to the washing machine 100 or a supply object to which the wash water is to be supplied (see FIGS. 1 and 2).

In the above-mentioned state, the wash water passing through the pipe part 10 may be "activated" by the magnetic field of the magnetized part 20 or other force, thereby possibly increasing the washing power and/or the pliability of the laundry. Therefore, the quantity of detergent and/or fabric softener may be decreased.

Referring to FIGS. 3 and 4, a magnetized part 40 in accordance with one or more embodiments of the present invention is attached to an outer side of the pipe part 30. The magnetized part 40 has a band 41 and a second magnet body 42.

The band 41 may comprise a rubber and/or plastic material and is attached to the outer side of the pipe part 30. The band 41 may have a circular belt shape.

A second magnet 42 is embedded or enclosed in the band 41 and uniformly applies a magnetic field inside the pipe part 30. The magnet 42 may have a circular belt shape corresponding to the band 41.

Therefore, the physical and/or chemical properties of the wash water moving into the pipe part 30 may be changed by a magnetic and/or other force. As the second magnet body 42, a neodymium or other lanthanide magnet, which is a permanent magnet having a strong magnetic field, is used.

When the plurality of magnetized parts 40 are placed in a longitudinal direction of the pipe part 30, the wash water passing through the pipe part 30 may be "activated" and/or a lime material may be extracted.

Meanwhile, since the second magnet 42 applies a magnetic field to the pipe part 30, the second magnet 42 may be between the band 41 and the pipe part 30 without being limited as long as it is enclosed or embedded in the band 41.

An action of the hose for passing water through a magnetic field in accordance with one or more embodiments of the present invention having the above-mentioned structure will be described below.

When the wash water includes the lime material, one end of the pipe part 30 is connected to the water feeding source and another end of the pipe part 30 is connected to the washing machine 100 or other supply objects to which the wash water is to be supplied.

In this case, the plurality of bands 41 are arranged in an outer longitudinal direction of the pipe part 30. The band 41 comprises a rubber and/or plastic material and is attached to the outer side of the pipe part 30. The band 41 has the second magnet 42 enclosed or embedded therein, which generates a magnetic field (see FIGS. 3 and 4).

In the above-mentioned state, the wash water passing through the pipe part 30 may be "activated" by the magnetic field of the magnetized part 40, thereby possibly increasing the washing power and/or the pliability of the laundry. Therefore, the quantity of detergent and/or fabric softener may be decreased.

Referring to FIG. 5, the magnetized part 60 in accordance with one or more embodiments of the present invention is connected to the pipe part 50.

The pipe part 50 includes a first pipe 51 and a second pipe 52. For example, one end of the first pipe 51 is connected to the water feeding source and another end thereof is connected to the magnetized part 60. One end of the second pipe 52 is connected to a wash water pipe 133 and another end thereof is connected to the magnetized part 60.

Referring to FIGS. 6 to 8, the magnetized part 60 in accordance with embodiment(s) of the present invention includes a first case part 61, a second case part 62, and a magnetic part 63.

The first case part 61 is connected to the other end of the first pipe 61 and the second case part 62 is connected to the other end of the second pipe 52. The first case part 61 and the second case part 62 are screw-connected to each other.

The first case part 61 and the second case part 62 have a space therein to pass the wash water therethrough.

The magnetic part 63 is embedded or enclosed in the second case part 62. The magnetic part 63 generates a magnetic field that may change the physical and/or chemical properties of the wash water passing through the magnetic part 63.

The magnetized part 60 in accordance with embodiment(s) of the present invention includes a first packing 64 and a second packing 65.

The first packing (or washer) 64 is between the first case part 61 and the magnetic part 63 and is configured to prevent water from leaking. The second packing (or washer) 65 is between the second case part 62 and the magnetic part 63 and is configured to prevent water from leaking. In this case, the first packing 64 and the second packing 65 are made of a flexible material, such as rubber and/or plastic.

The first case part 61 in accordance with embodiment(s) of the present invention includes a first insertion body 611 and a first coupling body 612.

The first insertion body 611 is inserted into the first pipe 51 to guide the wash water. The first insertion body 611 has a pipe shape, and one or more first locking protrusions 613 protrude from an outer circumferential surface of the first insertion body 611 to secure the first insertion body 611 in the first pipe 51.

Therefore, when the first insertion body 611 is inserted into the other end of the first pipe 51, an inner side of the first pipe 51 is locked to the first locking protrusion(s) 613 to limit, inhibit or prevent a separation of the first pipe 51 from the first insertion body 611.

The first coupling body 612 extends from the first insertion body 611. The first coupling body 612 has an inner space larger than that of the first insertion body 611. An inner side of the first coupling body 612 has a screw thread for assembling.

The second case part 62 in accordance with embodiment(s) of the present invention has a second insertion body 621 and a second coupling body 622.

The second insertion body 621 is inserted into the second pipe 52 to guide the wash water. The second insertion body 621 has a pipe shape, and one or more second locking protrusions 623 protrude from an outer circumferential surface of the second insertion body 621 to secure the second insertion body 621 in the second pipe 52.

Therefore, when the second insertion body 621 is inserted into the other end of the second pipe 52, an inner side of the second pipe 52 is locked to the second locking protrusion(s) 623 to limit, inhibit or prevent a separation of the second pipe 52 from the second insertion body 621.

The second coupling body 622 extends from the second insertion body 621. The second coupling body 622 has an inner space larger than that of the second insertion body 621.

The screw end of the second coupling body 622 is inserted into the first coupling body 612 using the screw thread on the outer circumferential surface of the second coupling body 622. Therefore, the first coupling body 612 and the second coupling body 622 are screw-connected to each other.

The magnetic part 63 is in the space in the second coupling body 622. The magnetic part 63 applies the magnetic field to the wash water.

The magnetic part 63 in accordance with embodiment(s) of the present invention includes a compartment 71 and a generation part 72.

The compartment 71 is inserted into the second case part 62 and embedded or enclosed in the second coupling body 622 of the second case part 62. The compartment 71 includes a waterway 73 through which the wash water passes.

In this case, the first packing 64 having a ring shape is between one end of the compartment 71 and the first coupling body 612, and the second packing 65 having a ring shape is between another end of the compartment 71 and the second coupling body 622.

The first packing 64 and the second packing 65 prevent the wash water from leaking through or remaining between the outer side of the compartment 71 and the second coupling body 622.

The generation part 72 is embedded or enclosed in the compartment 71. The generation part 72 generates the magnetic field to be applied to the wash water passing through the waterway 73.

The compartment 71 in accordance with embodiment(s) of the present invention includes an insertion box 81, a waterway plate 82, a sealing plate 83, and a cover plate 84.

The insertion box 81 is inserted into the second case part 62. The insertion box 81 has a cylindrical shape and a curvature corresponding to an inner side of the second coupling body 622 of the second case part 62.

The waterway plate 82 is inside the insertion box 81 and spaced from the insertion box 81 by the sealing plate 83 and cover plate 84. Thus, the waterway plate 82 defines the inner side of the insertion box 81. In this case, a space inside the waterway plate becomes the waterway 73 through which the wash water passes.

The sealing plate 83 connects one end of the waterway plate 82 to one end of the insertion box 81 to close a portion at which the one end of the insertion box 81 would be otherwise opened, other than the waterway 73.

The insertion box 81, the waterway plate 82, and the sealing plate 83 are injection-molded, and thus form an integral unit. A center thereof includes the waterway 73, and a space in which the generation part 72 is placed may be partitioned at both sides or ends of the waterway 73.

The cover plate 84 is seated at an opposite end of the waterway plate 82 and an opposite end of the insertion box 81 from the sealing plate 83. The cover plate 84 may reversibly close a portion at which one end of the insertion box 81 is opened, other than the waterway 73.

Therefore, an operator separates the cover plate 84 from the end of the insertion box 81 to be able to replace or repair the generation part 72.

The cover plate 84 has a disk shape to close the end of the insertion box 81. The cover plate 84 includes a through hole 85 which communicates with the waterway 73. Further, the end of the waterway plate 82 contacting the cover plate 84 has a protruding elastic plate 86 which is inserted into the through hole 85.

The inner side of the same (open) end of the insertion box 81 includes an insertion step 88. The insertion step 88 and the same (open) end of the waterway plate 82 are on the same horizontal line.

The cover plate 84 is seated at the end of the waterway plate 82 and on the insertion step 88 to close the insertion box 81. In this case, the elastic plate 86 is inserted into the through hole 85 of the cover plate 84 so as to hold the cover plate 84.

The elastic plate 86 may have a thin film shape to have elasticity. The elastic plate 86 may have an inclination so as to adhere or secure to the cover plate 84.

One or more water-proofing pads 89 may be placed between the cover plate 84 and the elastic plate 86. The water-proofing pad(s) 89 prevent the wash water from entering into the compartment 71.

The open end of the insertion box 81 includes guide protrusions 91. The guide protrusions 91 protrude inwardly from the inner side of the insertion box 81. In this case, the plurality of guide protrusions 91 may be spaced apart from each other along an inner circumferential surface of the insertion box 81.

The cover plate 84 includes guide grooves 92 into which the guide protrusions 91 are inserted. The same number guide grooves 92 as the guide protrusions 91 are provided in positions corresponding to the guide protrusions 91.

Therefore, the guide protrusions 91 are inserted into the guide grooves 92 while the cover plate 84 slidably moves into the insertion step 88 to prevent movement or a position change of the cover plate 84.

The generation part 72 in accordance with embodiment(s) of the present invention includes one or more third magnets 721 and a shielding plate 722.

The third magnets 721 are in the compartment 71. For example, the third magnets 721 are coupled or in contact with the outer surface of the waterway plate 82 to apply a magnetic field to the wash water passing through the waterway 73.

The shielding plate 722 is coupled or in contact with the third magnet body 721. The shielding plate 722 shields the emission of a possibly harmful electromagnetic wave from the third magnets 721 to inhibit or prevent malfunction of peripheral electronic devices (e.g., as a result of electromagnetic interference).

The plurality of third magnets 721 are spaced apart from each other to induce a pulse or the generation of multiple pulses. Therefore, the magnetic field applied to the wash water may be increased.

Meanwhile, the plurality of third magnets 721 having a length along a width direction of the waterway plate 82 are disposed in a longitudinal direction of the waterway plate 82. Further, one shielding plate 722 is coupled or in contact with the plurality of third magnet bodies 721 to suppress transmission of an electromagnetic wave.

The action of the hose in accordance with the embodiment(s) of the present invention shown in Figs. 5-8 having the above-mentioned structure will be described below.

When the wash water includes a lime material, one end of the pipe part 50 is connected to the water feeding source and another end of the pipe part 50 is connected to the washing machine 100 or other supply objects to which the wash water is to be supplied.

In this case, the pipe part 50 is divided into a first pipe 51 and a second pipe 62, and the magnetized part 60 connects the first pipe 51 to the second pipe 52.

The magnetized part 60 includes the first case part 61 connected to the first pipe 51, the second case part 62 connected to the second pipe 52, and the magnetic part 63 applies the magnetic field to the wash water.

The first case part 61 is screw-connected to the second case part 62, and the second case part 62 includes, holds or encloses the magnetic part 63.

The magnetic part 63 is inserted into the second case part 62, and the middle thereof includes the compartment 71 forming the waterway 73 and the generation part 72 which is embedded or enclosed in the compartment 71 and generates the magnetic field to be applied to the wash water.

Therefore, the operator completes an assembly of the magnetic part 63 by placing the generation part 72 in the compartment 71 and seating the cover plate 84 on the insertion step 88 of the insertion box 81 and the open end of the waterway plate 82.

Further, the magnetic part 63 is inserted into the second case part 62, and the first case part 61 is coupled to the second case part 62. The assembly of the magnetized part 60 is completed when the first packing 64 is between the first case part 61 and the magnetic part 63, and the second packing 65 is between the second case part 62 and the magnetic part 63.

The assembled magnetized part 60 becomes the hose 3 for applying a magnetic field to water by connecting the first pipe 51 to the second pipe 52.

Meanwhile, when the wash water includes a lime material, the first pipe 51 is connected to the water feeding source, and the second pipe 52 is connected to the washing machine 100 or other supply objects to which the wash water is to be supplied (see FIGS. 5 and 6).

In the above-mentioned state, since the magnetized part 60 connects the first pipe 51 to the second pipe, the wash water passing through the magnetized part 60 may be "activated" by the magnetic field of the third magnet bodies 721 and/or other force, thereby possibly increasing the washing power and/or the pliability of the laundry. Therefore, the quantity of detergent and fabric softener may be decreased.

Although embodiments of the present invention have been described in detail, they are only examples. It will be appreciated by those skilled in the art that various modifications and equivalent other embodiments are possible from the present invention. Therefore, the technical protection scope of the present invention should be defined by the appended claims.

## Claims

1. A hose for supplying magnetized water, comprising:
a pipe part guiding the water; and
a magnetized part in the pipe part and generating a magnetic field,
wherein the magnetized part connects the pipe part.

2. The hose according to claim 1, wherein the pipe part includes a first pipe and a second pipe, and the magnetized part includes:
a first case part connected to the first pipe;
a second case part screw-connected to the first case part and connected to the second pipe; and
a magnetic part enclosed in the second case part that generates the magnetic field.

3. The hose according to claim 2, wherein the magnetized part further includes:
a first packing between the first case part and the magnetic part, configured to prevent water from leaking; and
a second packing between the second case part and the magnetic part, configured to prevent water from leaking.

4. The hose according to claim 2, wherein the first case part includes:
a first insertion body in the first pipe to guide the water; and
a first coupling body extending from the first insertion body and having a screw thread on an inner side thereof.

5. The hose according to claim 4, wherein the second case part includes:
a second insertion body in the second pipe to guide the water; and
a second coupling body extending from the second insertion body and having a screw thread on an outer side thereof so as to be screw-assembled with the first coupling body, the second coupling body having the magnetic part therein.

6. The hose according to claim 2, wherein the magnetized part includes:
a compartment in the second case part and having a waterway; and
a generation part in the compartment and generating a magnetic field.

7. The hose according to claim 6, wherein the compartment includes:
a cylindrical insertion box in the second case part and having a curvature corresponding to an inner side of the second case part;
a pair of waterway plates connected to or in contact with an inner side of the insertion box, spaced apart from each other and forming the waterway;
a sealing plate connecting one end of one waterway plate to one end of the insertion box to close an open portion of the insertion box, except for the waterway; and
a cover plate at another end of the waterway plate and another end of the insertion box to open and close the open portion of the insertion box, except for the waterway.

8. The hose according to claim 7, wherein the cover plate has a disk shape and is configured to open and close the other end of the insertion box,
the cover plate has a through hole which communicates with the waterway, and
the waterway plate includes an elastic plate protruding into the through hole so as to adhere to the cover plate.

9. The hose according to claim 8, further comprising a water-proofing pad between the cover plate and the elastic plate, configured to prevent water from leaking.

10. The hose according to claim 7, wherein an inner side of the other end of the insertion box includes a guide projection, and
the cover plate has a guide groove into which the guide projection is inserted.

11. The hose according to claim 6, wherein the generation part includes:
one or more third magnet bodies in the compartment; and
a shielding plate covering the third magnet body, configured to shield an electromagnetic wave.

12. The hose according to claim 11, wherein the plurality of third magnet bodies are spaced apart from each other and configured to induce a pulse.
